# FASCICULE DE BREVET EUROPEEN

(11) **EP 3 490 370 B1**
(45) Date de publication et mention de la délivrance du brevet: **03.06.2020**
(21) Numéro de dépôt: 17742401.7
(22) Date de dépôt: 11.07.2017
(51) Int. Cl.: A01K 11/00

(54) **PARTIE FEMELLE D'UN DISPOSITIF D'IDENTIFICATION ANIMALE COMPRENANT UN ÉLÉMENT DE BLOCAGE DE LA PARTIE MÂLE DANS LA PARTIE FEMELLE**
WEIBLICHES TEIL EINER VORRICHTUNG ZUR TIERIDENTIFIKATION MIT EINEM BLOCKIERELEMENT IM WEIBLICHEN TEIL FÜR DAS MÄNNLICHE TEIL
FEMALE PART OF AN ANIMAL IDENTIFICATION DEVICE INCLUDING BLOCKING ELEMENT FOR A MALE PART IN THE FEMALE PART

(30) Priorité: 27.07.2016 FR 1657216
(43) Date de publication de la demande: 05.06.2019
(60) Demande divisionnaire: 20167677.2
(73) Titulaire: Allflex Europe, 35500 Vitré (FR)
(72) Inventeur: DECALUWE, Johan, 53000 Laval (FR); HILPERT, Jean-Jacques, 35500 Vitré (FR); DESTOUMIEUX, Jean-Jacques, 81830 Lescure d'Albigeois (FR); TEYCHENE, Bruno, 81430 Mouzieys-Teulet (FR)
(74) Mandataire: Vidon Brevets & Stratégie
(86) Numéro de dépôt international: PCT/EP2017/067391
(87) Numéro de publication internationale: WO 2018/019571

(56) Documents cités:
- WO-A1-91/10982
- AU-A1- 2004 233 502
- CN-U- 201 967 479
- ES-A1- 2 257 979
- JP-A- 2005 065 598
- US-A- 4 953 313

## Description

### 1. Domaine de l'invention

Le domaine de l'invention est celui du marquage des animaux, au moyen d'un dispositif d'identification animale destiné à être fixé sur un animal.

Plus précisément, l'invention concerne la partie femelle d'un tel dispositif d'identification animale, et encore plus précisément un élément de blocage prévu dans la partie femelle, permettant de bloquer la partie mâle dans la partie femelle.

### 2. Art antérieur

Afin notamment d'améliorer le suivi du cheptel et/ou garantir l'origine des animaux, il est classiquement procédé au marquage des animaux en fixant un dispositif d'identification animale, par exemple à l'oreille d'un animal.

Classiquement, de tels dispositifs d'identification animale comprennent une partie mâle, formée d'une tige s'étendant à partir d'un support et se terminant par une tête, généralement en forme de pointe, et une partie femelle, comprenant une cavité de réception de la tête de la partie mâle.

De tels dispositifs doivent être inviolables afin d'assurer la traçabilité de l'animal, c'est-à-dire qu'il ne doit pas être possible d'enlever un dispositif d'identification apposé sur un premier animal pour le re-poser sur un deuxième animal.

Pour ce faire, il est notamment connu d'utiliser des éléments de retenue permettant de retenir la tête d'une partie mâle à l'intérieur de la cavité de réception d'une partie femelle, une fois la tête de la partie mâle insérée dans la partie femelle. Le document US4953313 divulgue une partie femelle d'un dispositif d'identification animale comprenant une cavité destinée à recevoir une tête d'une partie mâle.

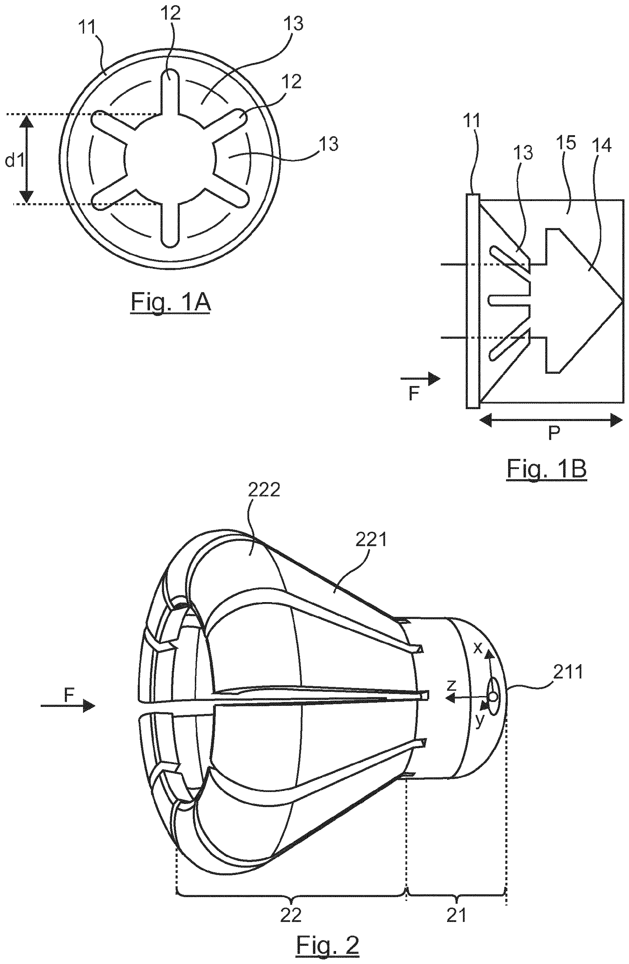

Comme illustré en figures 1A et 1B, de tels éléments de retenue prennent par exemple la forme d'une rondelle présentant plusieurs fentes 12 délimitant des pattes 13. Une telle rondelle est destinée à être placée à l'entrée de la partie femelle. Ainsi, lorsque la tête 14 de la partie mâle pénètre la partie femelle, selon la direction de la flèche F, les pattes 13, poussées par la tête mâle 14, s'écartent légèrement, puis reviennent en position lorsque la tête mâle a franchi la rondelle 11, pour bloquer la tête mâle 14 à l'intérieur de la cavité de réception 15 de la partie femelle.

Par exemple, le diamètre intérieur d1 de la rondelle passe de 5 mm à 6 mm lorsque la tête mâle 14 pousse les pattes 13, puis revient à 5 mm lorsque la tête mâle 14 est insérée dans la cavité de réception 15 de la partie femelle.

De telles pattes 13 peuvent être inclinées par rapport à la périphérie de la rondelle, leur extrémité libre étant dirigée vers le fond de la cavité de réception (c'est-à-dire inclinées dans une direction opposée à l'entrée de la cavité de réception), de façon à faciliter le passage de la tête mâle de l'orifice d'entrée vers le fond de la cavité de réception.

Une telle rondelle permet donc le passage de la tête mâle pour son insertion dans la cavité de la partie femelle, mais empêche son retrait, et donc l'ouverture des parties mâle et femelle.

Un inconvénient d'une telle rondelle est qu'elle nécessite d'exercer une force importante pour faire pénétrer la tête mâle dans la partie femelle. En effet, il faut plier fortement les pattes 13 pour que le diamètre intérieur d1 de la rondelle passe de 5 mm à 6 mm par exemple. Or la flexion de ces pattes 13, notamment lorsque la rondelle est en métal, est relativement limitée, ce qui induit un effort important.

De plus, l'utilisation d'une telle rondelle nécessite une profondeur P de la cavité importante. En effet, la profondeur de la cavité doit être prévue pour autoriser la flexion des pattes 13 vers le fond de la cavité, pour que la tête mâle puisse pénétrer dans la cavité 15. Or une fois que la tête mâle est insérée dans la cavité de réception et que les pattes 13 ont repris leur position initiale, la tête mâle n'est pas bloquée entre l'extrémité libre des pattes et le fond de la cavité. Il existe donc un jeu au niveau de la tête mâle, et un risque que des branchages, fils électriques, ou autre, viennent s'insérer entre le support de la partie mâle et la partie femelle.

Il existe donc un besoin pour un nouveau dispositif d'identification, inviolable, ne présentant pas l'ensemble des inconvénients de l'art antérieur.

### 3. Exposé de l'invention

L'invention propose une solution nouvelle sous la forme d'une partie femelle d'un dispositif d'identification animale, comprenant une cavité destinée à recevoir une tête d'une partie mâle du dispositif d'identification animale. L'invention est définie par la revendication 1.

Selon l'invention, une telle cavité comprend un élément de blocage destiné à maintenir la tête de la partie mâle à l'intérieur de la cavité de la partie femelle, ledit élément de blocage comprenant une base et au moins deux griffes élastiques s'étendant à partir de la base en direction de l'entrée de ladite cavité, les griffes étant mobiles entre au moins deux positions dont une position d'insertion permettant l'insertion de la tête mâle dans la cavité et une position de blocage permettant le blocage de la tête mâle à l'intérieur de ladite cavité.

Ainsi, l'invention propose une partie femelle nouvelle et inventive, reposant sur la présence d'un élément de blocage à l'intérieur de la cavité de réception de la partie femelle, formant ressort, permettant le passage de la tête mâle pour son insertion dans la cavité de la partie femelle, mais empêchant son retrait.

En particulier, la solution proposée offre une solution pour améliorer l'inviolabilité des dispositifs d'identification animale, sans nuire à la facilité de pose ni augmenter les coûts de fabrication.

Plus précisément, la présence de griffes élastiques s'étendant de la base de l'élément de blocage en direction de l'entrée de la cavité permet de diminuer l'effort de pose nécessaire pour faire pénétrer la partie mâle dans la partie femelle. En effet, une légère flexion des griffes élastiques est suffisante pour que l'ouverture de la cavité de réception s'agrandisse pour permettre le passage de la tête mâle. On rappelle que, selon l'art antérieur, les pattes s'étendent en direction du fond de la cavité de réception, ce qui nécessite d'exercer une force importante pour faire pénétrer la tête mâle dans la partie femelle.

De plus, la présence de griffes élastiques s'étendant de la base de l'élément de blocage en direction de l'entrée de la cavité permet de conserver une cavité de faible profondeur. En effet, une flexion légère des griffes élastiques étant suffisante pour que la tête mâle puisse pénétrer dans la cavité, il n'est pas nécessaire d'augmenter la profondeur de la cavité. De ce fait, le jeu au niveau de la tête mâle dans la cavité de la partie femelle peut être fortement réduit, ce qui permet d'améliorer la tenue du dispositif d'identification animale dans le temps.

En particulier, l'élément de blocage selon l'invention présente une hauteur sensiblement égale à la hauteur de la cavité. Les griffes élastiques présentent donc une longueur supérieure aux pattes selon l'art antérieur. Par rapport aux pattes selon l'art antérieur, l'utilisation de griffes plus longues permet de diminuer l'angle de pliage nécessaire pour obtenir une même ouverture.

La base et/ou les griffes de l'élément de blocage peuvent être en métal, par exemple en acier, en plastique, par exemple en nylon, en résine, en matériau composite, éventuellement enrichi en fibres de verre, etc.

De tels éléments sont donc particulièrement résistants contre les agressions extérieures, et améliorent ainsi l'inviolabilité du dispositif d'identification animale. En particulier, de tels éléments sont résistants aux hautes températures, et notamment au flambage, à l'ébouillantage, etc. Ils peuvent donc être retirés d'un animal après son abattage.

En particulier, l'élément de blocage définit un logement adapté pour recevoir la tête de la partie mâle, la base de l'élément de blocage étant destinée à recevoir l'extrémité en forme de pointe de ladite tête.

Ainsi, la base de l'élément de blocage peut prendre la forme d'un disque, contre lequel l'extrémité (pointe) de la tête mâle peut venir pendre appui, et les griffes une forme évasée, s'étendant de la base en direction de l'entrée de la cavité.

En variante, la base de l'élément de blocage présente une forme cylindrique ou partiellement sphérique et les griffes une forme tronconique, l'axe de révolution de l'élément de blocage coïncidant avec un axe d'emboitement de la partie femelle avec la partie mâle (i.e. avec l'axe de la cavité).

En particulier, si la base de l'élément de blocage est une calotte sphérique (« sphère mâle ») présentant une forme complémentaire avec le fond de la cavité de la partie femelle (« sphère femelle »), une liaison rotule est obtenue entre l'élément de blocage et la partie femelle.

Après la pose du dispositif d'identification animale, i.e. lorsque la partie mâle est bloquée dans l'élément de blocage, la liaison rotule offre trois degrés de liberté en rotation entre la partie mâle et la partie femelle, réduisant ainsi le risque de casse du dispositif d'identification animale et/ou de déchirement de l'oreille de l'animal.

Selon ces différentes configurations, la base se trouve dans le fond de la cavité dans la position de blocage (mais pas nécessairement en contact direct avec le fond de la cavité).

Selon un mode de réalisation particulier, la base de l'élément de blocage présente une paroi de fond. Ainsi, lorsque la tête mâle est insérée dans la cavité de la partie femelle, l'extrémité (pointe) de la tête mâle se trouve en butée contre la paroi de fond de la base de l'élément de blocage, et la tête mâle est bloquée entre les griffes et le fond de la base de l'élément de blocage. Le risque que des éléments extérieurs (branchages, fils électriques, ...) viennent s'insérer entre les parties mâle et femelle se trouve diminué.

En particulier, une telle paroi de fond, qui peut être conçue dans un matériau dur (métal, nylon, plastique rigide, matériau composite, etc), améliore l'inviolabilité du dispositif d'identification animale, en créant un blindage rendant difficile toute intrusion par perçage, déformation, etc.

Selon un mode de réalisation particulier, lesdites griffes sont réparties uniformément autour de la base de l'élément de blocage.

On assure de cette façon un meilleur maintien de la partie mâle dans la partie femelle, et donc une meilleure longévité du dispositif d'identification animale.

Par exemple, l'élément de blocage comprend dix griffes.

Selon l'invention les griffes sont contraintes en ouverture dans la position d'insertion.

De ce fait, il n'est pas nécessaire d'exercer une force supplémentaire pour écarter les griffes lors de l'insertion de la tête mâle dans la partie femelle, ce qui facilite la pose du dispositif d'identification animale (et diminue l'effort de pose par rapport aux techniques de l'art antérieur). On rappelle que les systèmes de l'art antérieur, au contraire, nécessitent de déformer un élément de retenue, comme les pattes d'une rondelle, pour faire pénétrer la tête mâle dans la partie femelle, ce qui engendre un effort de pose.

Selon un premier exemple, dans la position d'insertion, l'extrémité libre des griffes est maintenue dans une gorge de la partie femelle. Une telle gorge est localisée à l'entrée de la cavité, les griffes élastiques s'étendant de la base de l'élément de blocage en direction de l'entrée de la cavité.

Selon un deuxième exemple, la partie femelle comprend un chapeau de réception de la tête mâle, définissant la cavité, et un couvercle solidarisé au chapeau de réception, en forme de couronne, définissant l'entrée de la cavité, et l'extrémité libre des griffes est maintenue dans une rainure du couvercle dans la position d'insertion.

Selon un troisième exemple, l'extrémité libre des griffes est maintenue par un anneau de sûreté prévu à l'entrée de la cavité.

Selon un mode de réalisation particulier, la base de l'élément de blocage n'est pas en contact avec le fond de la cavité dans la position d'insertion, et la base de l'élément de blocage est en contact avec le fond de la cavité dans la position de blocage.

Ainsi, l'insertion de la tête mâle dans la partie femelle provoque un coulissement de l'élément de blocage à l'intérieur de la cavité de réception de la partie femelle, selon l'axe d'emboitement des parties mâle et femelle (i.e. l'axe de la cavité). Un tel coulissement permet de libérer l'extrémité libre des griffes, qui étaient contraintes en ouverture dans la position d'insertion. Le passage de la position d'insertion à la position de blocage est donc provoqué par l'insertion de la tête mâle dans la cavité de la partie femelle.

Selon une caractéristique particulière de l'invention, la partie femelle comprend également des moyens de verrouillage verrouillant l'élément de blocage dans la position de blocage.

De tels moyens de verrouillage empêchent l'ouverture de l'élément de blocage (i.e. des griffes flexibles) dans la position de blocage.

En particulier, le périmètre défini par l'extrémité libre des griffes en position de blocage est sensiblement égal au périmètre d'une section de la partie mâle.

De ce fait, le blocage se fait sur la totalité ou quasi-totalité de la circonférence de la tige de la partie mâle, par exemple, avec l'extrémité libre des griffes de l'élément de blocage venant en contact avec la totalité ou quasi-totalité de la circonférence de la tige, alors que selon l'art antérieur, les fentes entre les pattes imposent la présence d'un espace entre chaque patte.

Avec une partie femelle selon l'invention, la pression de contact sur la tête mâle est donc plus faible qu'avec les techniques de l'art antérieur, puisque la surface de contact entre l'élément de blocage et la partie mâle est plus grande. Par conséquent, le risque d'arrachement est plus faible. On assure ainsi une meilleure tenue du dispositif d'identification animale dans le temps.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A et 1B illustrent un exemple de rondelle permettant de maintenir une partie mâle dans une partie femelle selon l'art antérieur ;
- la figure 2 illustre un élément de blocage selon un mode de réalisation;
- les figures 3A à 3C illustrent un premier mode de réalisation selon lequel l'élément de blocage n'est pas pré-contraint en ouverture ;
- les figures 4A et 4B, 6A et 6B illustrent deux variantes d'un deuxième mode de réalisation de l'invention selon lequel l'élément de blocage est pré-contraint en ouverture ;
- les figures 5A et 5B proposent un exemple de verrouillage de l'élément de blocage en position de blocage.

### 5. Description de modes de réalisation de l'invention

### 5.1 Principe général

Le principe général de l'invention repose sur l'utilisation d'un élément de blocage, prévu à l'intérieur de la cavité de réception d'une partie femelle, permettant le passage d'une tête d'une partie mâle pour son insertion dans la cavité de la partie femelle, mais empêchant son retrait.

Un tel élément de blocage est illustré en figure 2. Il comprend une base 21 et au moins deux griffes élastiques 22 s'étendant à partir de la base 21 en direction de l'entrée de la cavité de la partie femelle. L'élasticité des griffes peut être obtenue en utilisant un matériau tel que le métal, le nylon, un matériau composite enrichi en fibres de verre, etc.

La base 21 peut présenter une forme circulaire en deux dimensions, comme un anneau, un disque, ou en trois dimensions, comme un cylindre, et/ou une demi-sphère ou un segment de sphère (calotte sphérique notamment), de façon à pouvoir coopérer avec le fond de la cavité des parties femelles classiquement utilisées dans le domaine de l'identification animale. Elle peut notamment présenter une paroi de fond 211, qui peut être plane ou arrondie. Par exemple, comme illustré en figure 2, la base est formée d'un cylindre creux présentant une paroi de fond arrondie, prenant la forme d'une calotte sphérique.

Les griffes 22 s'étendent à partir du disque ou de l'anneau formant la base 21, ou à partir de l'extrémité (base) du cylindre, ou du segment de sphère, opposée au fond de la cavité, en direction de l'orifice d'entrée de la cavité. Elles présentent une forme évasée (i.e. le diamètre défini par l'extrémité libre des griffes est supérieur au diamètre défini à la base des griffes), tronconique, de façon à définir un logement adapté pour recevoir la tête de la partie mâle. Elles sont avantageusement réparties uniformément autour de la base.

Chaque griffe est formée par une lame ressort, qui peut être rabattue en crochet pour maintenir la tête mâle en position de blocage. Par exemple, chaque griffe 22 comprend au moins deux portions, dont une portion droite 221 définissant la forme évasée, et une portion courbe 222 définissant le crochet. Par exemple, la portion droite présente une longueur de l'ordre de 7 à 10 mm et la portion courbe une longueur de l'ordre de 1 à 3 mm.

Ces griffes sont mobiles entre au moins deux positions dont une position d'insertion permettant l'insertion de la tête dans la cavité (selon le sens de la flèche F) et une position de blocage permettant le blocage de la tête à l'intérieur de la cavité. Dans la position d'insertion, les griffes sont légèrement écartées pour laisser passer la tête mâle. Dans la position de blocage, les griffes permettent de bloquer la partie mâle en position, à l'intérieur de la cavité femelle.

Selon un mode de réalisation particulier, le nombre et/ou la dimension des griffes sont choisis de façon qu'en position de blocage, le périmètre défini par l'extrémité libre des griffes soit sensiblement égal au périmètre d'une section de la partie mâle, par exemple au périmètre d'une section de la tige de la partie mâle. En d'autres termes, le diamètre intérieur défini par l'extrémité libre des griffes est sensiblement égal au diamètre de la tige au niveau de la jonction entre la tige et la tête mâle.

On décrit ci après différents exemples de mise en œuvre de l'invention.

Classiquement, on considère un dispositif d'identification animale comprenant une partie mâle, formée d'une tige s'étendant à partir d'un support et se terminant par une tête, et d'une partie femelle comprenant une cavité de réception de la tête de la partie mâle. La tête mâle présente, à sa base, un diamètre supérieur à celui de la tige. La jonction entre la tige et la tête mâle défini donc un premier épaulement. Eventuellement, un deuxième épaulement peut être défini sur la tige.

Un tel dispositif d'identification animale peut notamment être formé de deux pièces, comprenant une partie mâle et une partie femelle séparées, ou d'une seule pièce, la partie mâle et la partie femelle étant alors reliées par un lien flexible.

### 5.2 Premier mode de réalisation

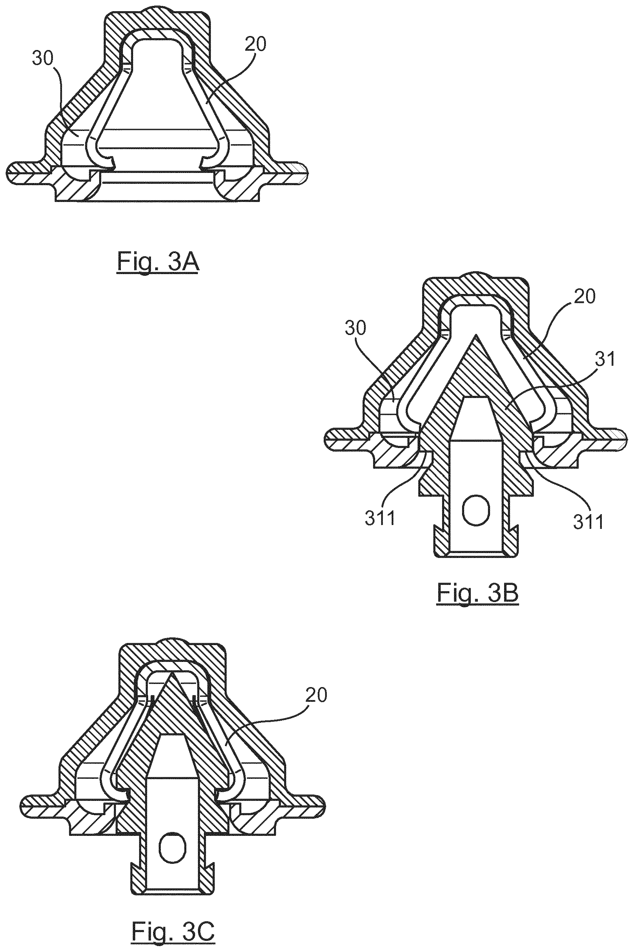

On décrit, en relation avec les figures 3A à 3C, un premier mode de réalisation selon lequel les griffes de l'élément de blocage sont « relâchées » avant insertion de la partie mâle dans la partie femelle.

Avant insertion de la tête mâle dans la partie femelle, l'élément de blocage 20 est en position de repos, comme illustré en figure 3A. Par exemple, la base de l'élément de blocage 20 est en contact avec le fond de la cavité 30, et aucune contrainte n'est appliquée sur les griffes de l'élément de blocage 20, qui sont donc « relâchées ».

Lors de l'insertion de la partie mâle dans la partie femelle, la forme en pointe de la tête mâle 31 permet d'écarter progressivement les griffes de l'élément de blocage 20, jusqu'au diamètre maximale de la tête mâle, comme illustré en figure 3B. Une contrainte est donc exercée par la tête mâle 31 sur les griffes de l'élément de blocage 20. Cette position correspond à une position d'insertion, permettant l'insertion de la tête dans la cavité.

Comme illustré en figure 3C, une fois la tête mâle insérée dans la cavité 30, i.e. une fois que le premier épaulement 311 de la tête mâle a traversé l'extrémité libre des griffes, la contrainte exercée par la tête mâle sur les griffes de l'élément de blocage 20 est relâchée, et les griffes reprennent leur position d'origine. Dans cette position, les griffes de l'élément de blocage enserrent la partie mâle à la base du premier épaulement 311. Cette position correspond à une position de blocage, permettant le blocage de la tête mâle à l'intérieur de la cavité.

Eventuellement, des moyens de verrouillage, tels qu'une bague de verrouillage, peuvent être utilisés pour verrouiller l'élément de blocage dans la position de blocage, empêchant notamment l'ouverture/écartement des griffes après insertion la tête mâle dans la partie femelle.

### 5.3 Deuxième mode de réalisation

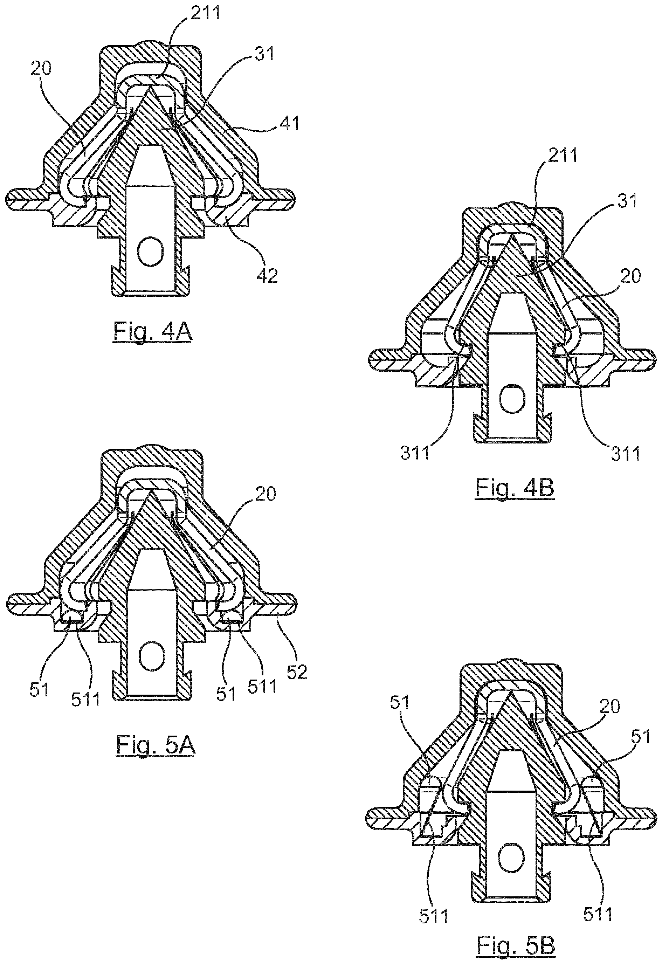

On décrit désormais, en relation avec les figures 4A à 6B, un deuxième mode de réalisation, qui représente l'invention, selon lequel les griffes de l'élément de blocage sont contraintes en ouverture avant insertion de la partie mâle dans la partie femelle.

Selon le premier exemple illustré en figures 4A et 4B, on considère par exemple que la partie femelle comprend un chapeau 41 de réception de la tête de la partie mâle, définissant la cavité, un couvercle 42 solidarisé au chapeau de réception, en forme de couronne, définissant l'entrée de la cavité, et l'élément 20 de blocage de la tête mâle dans la partie femelle. Le couvercle 42 peut éventuellement être fermé par un opercule déchirable, garantissant la première utilisation de la partie femelle et évitant l'introduction de salissure à l'intérieur de la cavité. Un tel opercule peut être déchiré par la tête mâle lors de l'insertion de la tête mâle dans la partie femelle.

Avant insertion de la tête mâle 31 dans la partie femelle, l'élément de blocage 20 est contraint en ouverture, comme illustré en figure 4A. Pour ce faire, l'extrémité libre de chaque griffe de l'élément de blocage 20 est placée dans un logement de la partie femelle, de façon à forcer l'ouverture des griffes. Par exemple, un tel logement est une gorge formée dans la partie femelle, au niveau de l'orifice d'entrée de la cavité. Un tel logement peut également être une rainure formée dans le couvercle 42. Cette position correspond à une position d'insertion, permettant l'insertion de la tête dans la cavité.

Dans cette position d'insertion, la base de l'élément de blocage 20 n'est pas en contact avec le fond de la cavité.

La tête mâle 31 peut pénétrer facilement dans la cavité de réception de la partie femelle, puisque les griffes de l'élément de blocage sont contraintes en ouverture et ne gênent donc pas l'introduction de la tête mâle. L'effort de pose est donc réduit. Lorsque l'extrémité en pointe de la tête mâle arrive en butée contre la paroi de fond 211 de l'élément de blocage 20, la tête mâle pousse la paroi de fond 211 en direction du fond de la cavité de la partie femelle. Comme illustré en figure 4B, la translation de l'élément de blocage 20 vers le fond de la cavité libère les griffes de leur logement, dès que le déplacement est suffisant (par exemple lorsque la paroi de fond 211 de l'élément de blocage 20 entre en contact avec le fond de la cavité, ou avant). La contrainte exercée sur les griffes de l'élément de blocage 20 est donc relâchée, et les griffes peuvent se fermer. Dans cette position, les griffes de l'élément de blocage enserrent la partie mâle à la base du premier épaulement 311. Cette position correspond à une position de blocage, permettant le blocage de la tête mâle à l'intérieur de la cavité.

Comme illustré en figures 5A et 5B, des moyens de verrouillage 51 peuvent être utilisés pour verrouiller l'élément de blocage dans la position de blocage. Par exemple, de tels moyens de verrouillage comprennent une bague de verrouillage ou des billes de verrouillage.

Dans la position d'insertion, ces moyens de verrouillage 51 sont maintenus par les griffes de l'élément de blocage 20 dans un logement de la partie femelle (par exemple un logement prévu dans le couvercle 52). Dans la position de blocage, ces moyens de verrouillage 51 sont libérés.

Selon l'exemple illustré en figures 5A et 5B, dans la position d'insertion, les griffes de l'élément de blocage compriment la bague (ou les billes) et un ressort de verrouillage 511, contre une paroi d'un logement prévu à cet effet de la partie femelle. Comme décrit ci-dessus en relation avec les figures 4A et 4B, la base de l'élément de blocage 20 n'est pas en contact avec le fond de la cavité dans cette position d'insertion.

Lorsque la tête mâle pousse la paroi de fond 211 de l'élément de blocage 20 en direction du fond de la cavité de la partie femelle, la contrainte exercée sur les griffes de l'élément de blocage 20 est relâchée, et par suite, la contrainte exercée sur la bague (ou les billes) et le ressort de verrouillage 511 est relâchée. Le ressort de verrouillage 511, libéré, propulse la bague de verrouillage (ou les billes) hors de son logement, en direction du fond de la cavité, jusqu'à une position de butée dans laquelle la bague (ou les billes) vient en contact avec la paroi intérieure de la cavité et les griffes. Dans cette position, la bague verrouille l'élément de blocage 20, en empêchant l'ouverture/écartement des griffes, puisque la bague prend appui d'une part sur la paroi intérieure de la cavité et d'autre part sur les griffes.

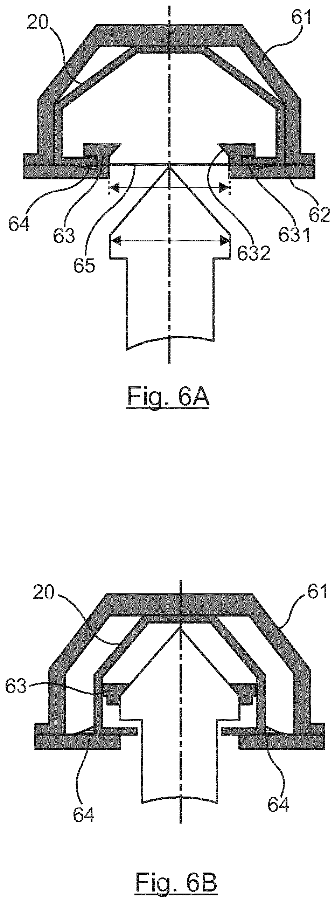

Selon le deuxième exemple illustré en figures 6A et 6B, on considère par exemple que la partie femelle comprend un chapeau 61 de réception de la tête de la partie mâle, définissant la cavité, un couvercle 62 solidarisé au chapeau de réception, en forme de couronne, l'élément 20 de blocage de la tête mâle dans la partie femelle, et un anneau de sûreté 63, permettant de contraindre en ouverture les griffes de l'élément de blocage.

Par exemple, un tel anneau de sûreté 63 est solidarisé au couvercle 62, à l'intérieur de la cavité, de façon réversible. Le couvercle 62 et l'anneau de sûreté définissent l'entrée de la cavité. L'anneau de sûreté 63, ou le couvercle 62, peut éventuellement être fermé par un opercule déchirable 65, garantissant la première utilisation de la partie femelle et évitant l'introduction de salissure à l'intérieur de la cavité. Un tel opercule peut être déchiré par la tête mâle lors de l'insertion de la tête mâle dans la partie femelle.

Un tel anneau de sûreté 63 dispose, sur sa paroi extérieure, d'un logement 631, telle une rainure, permettant de maintenir les griffes de l'élément de blocage en position ouverte dans la position d'insertion. Un tel anneau de sûreté 63 dispose également, sur sa paroi intérieure, d'une surface d'appui 632, contre laquelle la tête mâle peut prendre appui pour désolidariser l'anneau de sûreté du couvercle 62.

Ainsi, comme illustré en figure 6A, avant insertion de la tête mâle dans la partie femelle, l'élément de blocage 20 est contraint en ouverture. Cette position correspond à une position d'insertion, permettant l'insertion de la tête dans la cavité.

Lorsque la tête mâle pénètre dans la cavité, comme illustré en figure 6B, la tête mâle pousse l'anneau de sûreté 63 en direction du fond de la cavité de la partie femelle. La translation de l'anneau de sûreté 63 vers le fond de la cavité libère les griffes de leur logement. La contrainte exercée sur les griffes de l'élément de blocage 20 est donc relâchée, et les griffes peuvent se fermer. Dans cette position, les griffes de l'élément de blocage enserrent la tige de la partie mâle à la base d'un épaulement formé à la jonction de la tige et de la tête mâle. Cette position correspond à une position de blocage, permettant le blocage de la tête mâle à l'intérieur de la cavité.

Comme illustré en figures 6A et 6B, des moyens de verrouillage 64 peuvent également être utilisés pour verrouiller l'élément de blocage dans la position de blocage selon ce deuxième exemple. Par exemple, de tels moyens de verrouillage prennent la forme d'une pièce mobile de type bouton ou lèvres anti-retour.

Dans la position d'insertion, l'anneau de sûreté 63 et/ou les griffes ouvertes de l'élément de blocage appuient sur les lèvres 64 (ou le bouton) pour les maintenir enfoncées dans un logement du couvercle 62.

Lorsque la tête mâle pousse l'anneau de sûreté 63 en direction du fond de la cavité de la partie femelle, la contrainte exercée sur les griffes de l'élément de blocage 20 est relâchée, et par suite, les lèvres 64 (ou le bouton) sont relâchées.

Les lèvres 64 ne sont donc plus enfoncées dans un logement du couvercle 62, mais saillantes. Dans cette position, les lèvres 64 saillantes verrouillent l'élément de blocage 20, en empêchant l'ouverture/écartement des griffes.

### 5.4 Variantes

On a présenté ci-dessus différents exemples de réalisation de l'invention, selon lesquels la partie femelle présente une forme tronconique. Bien entendu, d'autres formes sont envisageables, comme une forme cylindrique ou autre. De la même façon, la forme de la cavité de réception peut être différente, et par exemple cylindrique.

Par ailleurs, la partie mâle peut également présenter des formes différentes, comme celles illustrées en figure 4A ou en figure 6A. La forme de la partie femelle selon l'invention doit être adaptée pour coopérer avec la forme choisie pour la partie mâle.

## Revendications

1. Partie femelle d'un dispositif d'identification animale, comprenant une cavité (30) destinée à recevoir une tête d'une partie mâle dudit dispositif d'identification animale, ladite cavité comprend un élément de blocage (20), prévu à l'intérieur de ladite cavité, destiné à maintenir ladite tête à l'intérieur de ladite cavité,
ledit élément de blocage (20) comprenant une base (21) et au moins deux griffes élastiques (22) s'étendant à partir de ladite base en direction de l'entrée de ladite cavité, **caractérisée en ce que** lesdites griffes étant mobiles entre au moins deux positions dont une position avant insertion de ladite tête dans ladite cavité, dite position d'insertion, dans laquelle lesdites griffes (22) sont contraintes en ouverture et permettent l'insertion de ladite tête dans ladite cavité, et une position après insertion de ladite tête dans ladite cavité, dite position de blocage, permettant le blocage de ladite tête à l'intérieur de ladite cavité.

2. Partie femelle selon la revendication 1, **caractérisée en ce que** ladite base (21) et/ou lesdites griffes (22) dudit élément de blocage sont métalliques.

3. Partie femelle selon l'une quelconque des revendications 1 et 2, **caractérisée en ce que** ledit élément de blocage (20) définit un logement adapté pour recevoir la tête de ladite partie mâle, ladite base étant destinée à recevoir l'extrémité en pointe de ladite tête.

4. Partie femelle selon l'une quelconque des revendications 1 à 3, **caractérisée en ce que** la base (21) dudit élément de blocage présente une forme cylindrique ou partiellement sphérique et **en ce que** les griffes (22) dudit élément de blocage présentent une forme tronconique, l'axe de révolution dudit élément de blocage coïncidant avec un axe d'emboitement de ladite partie femelle avec ladite partie mâle.

5. Partie femelle selon l'une quelconque des revendications 1 à 4, **caractérisée en ce que** la base dudit élément de blocage présente une paroi de fond (211).

6. Partie femelle selon l'une quelconque des revendications 1 à 5, **caractérisée en ce que** lesdites griffes (22) sont réparties uniformément autour de ladite base (21).

7. Partie femelle selon l'une quelconque des revendications 1 à 6, **caractérisée en ce que**, dans ladite position d'insertion, l'extrémité libre desdites griffes est maintenue dans une gorge de ladite partie femelle.

8. Partie femelle selon l'une quelconque des revendications 1 à 6, **caractérisée en ce qu'**elle comprend un chapeau (41) de réception de ladite tête de la partie mâle, définissant ladite cavité, et un couvercle (42) solidarisé audit chapeau de réception, en forme de couronne, définissant l'entrée de ladite cavité, et **en ce que**, dans ladite position d'insertion, l'extrémité libre desdites griffes est maintenue dans une rainure dudit couvercle.

9. Partie femelle selon l'une quelconque des revendications 1 à 6, **caractérisée en ce que**, dans ladite position d'insertion, l'extrémité libre desdites griffes est maintenue par un anneau de sûreté (63) prévu à l'entrée de ladite cavité.

10. Partie femelle selon l'une quelconque des revendications 1 à 9, **caractérisée en ce que**, dans ladite position d'insertion, la base (21) dudit élément de blocage n'est pas en contact avec le fond de ladite cavité, et ce que, dans ladite position de blocage, la base dudit élément de blocage est en contact avec le fond de ladite cavité.

11. Partie femelle selon l'une quelconque des revendications 1 à 10, **caractérisée en ce qu'**elle comprend des moyens de verrouillage (51, 64) verrouillant ledit élément de blocage dans ladite position de blocage.

12. Partie femelle selon l'une quelconque des revendications 1 à 11, **caractérisée en ce que** le périmètre défini par l'extrémité libre desdites griffes en position de blocage est sensiblement égal au périmètre d'une section de ladite partie mâle.

13. Partie femelle selon l'une quelconque des revendications 1 à 12, **caractérisé en ce que** la base dudit élément de blocage est une calotte sphérique présentant une forme complémentaire avec le fond de ladite cavité.

## Patentansprüche

1. Buchsenteil einer Tieridentifikationsvorrichtung, umfassend einen Hohlraum (30), der dazu bestimmt ist, einen Kopf eines Steckteils der Tieridentifikationsvorrichtung aufzunehmen, wobei der Hohlraum ein Blockierelement (20) aufweist, das im Inneren des Hohlraums vorgesehen ist, das dazu bestimmt ist, den Kopf im Inneren des Hohlraums zu halten,
wobei das Blockierelement (20) eine Basis (21) und mindestens zwei elastische Klauen (22) aufweist, die sich von der Basis aus in Richtung des Eingangs des Hohlraums erstrecken,
**dadurch gekennzeichnet, dass**
die Klauen zwischen mindestens zwei Positionen beweglich sind, wobei eine der Positionen vor dem Einführen des Kopfes in den Hohlraum, die Einführposition genannt wird, in der die Klauen (22) in der Öffnung gespannt sind und das Einführen des Kopfes in den Hohlraum ermöglichen, und eine Position nach dem Einführen des Kopfes in den Hohlraum, die Blockierposition genannt wird, das Blockieren des Kopfes in den Hohlraum ermöglichen.

2. Buchsenteil nach Anspruch 1, **dadurch gekennzeichnet, dass** die Basis (21) und/oder die Klauen (22) des Blockierelements metallisch sind.

3. Buchsenteil nach einem der Ansprüche 1 und 2, **dadurch gekennzeichnet, dass** das Blockierelement (20) eine Aufnahme definiert, die dazu angepasst ist, den Kopf des Steckteils aufzunehmen, wobei die Basis dazu bestimmt ist, das spitz auslaufende Ende des Kopfes aufzunehmen.

4. Buchsenteil nach einem der Ansprüche 1 bis 3, **dadurch gekennzeichnet, dass** die Basis (21) des Blockierelements eine zylindrische oder partiell sphärische Form aufweist und dadurch, dass die Klauen (22) des Blockierelements eine kegelstumpfartige Form aufweisen, wobei die Rotationsachse des Blockierelements mit einer Eingriffsachse des Buchsenteils mit dem Steckteil zusammenfällt.

5. Buchsenteil nach einem der Ansprüche 1 bis 4, **dadurch gekennzeichnet, dass** die Basis des Blockierelements eine Bodenwand (211) aufweist.

6. Buchsenteil nach einem der Ansprüche 1 bis 5, **dadurch gekennzeichnet, dass** die Klauen (22) gleichmäßig um die Basis (21) herum verteilt sind.

7. Buchsenteil nach einem der Ansprüche 1 bis 6, **dadurch gekennzeichnet, dass** das freie Ende der Klauen in der Einführposition in einer Nut des Buchsenteils gehalten wird.

8. Buchsenteil nach einem der Ansprüche 1 bis 6, **dadurch gekennzeichnet, dass** es einen Hut (41) zum Aufnehmen des Kopfes des Steckteils, der den Hohlraum definiert, und einen Deckel (42), der mit dem Hut zum Aufnehmen fest verbunden ist, in Form einer Krone aufweist, der den Eingang des Hohlraums definiert, und dadurch, dass das freie Ende der Klauen in der Einführposition in einer Nut des Deckels gehalten wird.

9. Buchsenteil nach einem der Ansprüche 1 bis 6, **dadurch gekennzeichnet, dass** das freie Ende der Klauen in der Einführposition durch einen Sicherungsring (63) gehalten wird, der am Eingang des Hohlraums vorgesehen ist.

10. Buchsenteil nach einem der Ansprüche 1 bis 9, **dadurch gekennzeichnet, dass** die Basis (21) des Blockierelements in der Einführposition nicht mit dem Boden des Hohlraums in Kontakt ist und dadurch, dass die Basis des Blockierelements in der Blockierposition mit dem Boden des Hohlraums in Kontakt steht.

11. Buchsenteil nach einem der Ansprüche 1 bis 10, **dadurch gekennzeichnet, dass** es Verriegelungsmittel (51, 64) aufweist, die das Blockierelement in der Blockierposition verriegeln.

12. Buchsenteil nach einem der Ansprüche 1 bis 11, **dadurch gekennzeichnet, dass** der durch das freie Ende der Klauen in der Blockierposition definierte Umfang im Wesentlichen gleich dem Umfang eines Abschnitts des Steckteils ist.

13. Buchsenteil nach einem der Ansprüche 1 bis 12, **dadurch gekennzeichnet, dass** die Basis des Blockierelements eine sphärische Kalotte ist, die eine zu dem Boden des Hohlraums komplementäre Form aufweist.

## Claims

1. Female part of an animal-identifying device, comprising a cavity (30) intended to receive a head of a male part of said animal-identifying device,
said cavity comprising a blocking element (20) provided within said cavity, intended to hold said head inside said cavity,
said blocking element (20) comprising a base (21) and at least two resilient claws (22) extending from said base towards the entrance of said cavity,
**characterized in that** said claws are movable between at least two positions, one position before insertion of the head into the cavity, called insertion position, in which said claws (22) are stressed into opening and enable the insertion of said head into said cavity, and one position after insertion of the head into the cavity, called blocking position, enabling the blocking of said head inside said cavity.

2. Female part according to claim 1, **characterized in that** said base (21) and/or said claws (22) of said blocking element are made out of metal.

3. Female part according to any one of the claims 1 and 2, **characterized in that** said blocking element (20) defines a housing adapted to receiving the head of said male part, said base being intended to receive a pointed extremity of said head.

4. Female part according to any one of the claims 1 to 3, **characterized in that** the base (21) of said blocking element is cylindrical, or partially spherical, and **in that** the claws (22) of said blocking element are truncatedly conical, the axis generated by revolution of said blocking element coinciding with a joining axis between said female part and said male part.

5. Female part according to any one of the claims 1 to 4, **characterized in that** the base of said blocking element has a back wall (211).

6. Female part according to any one of the claims 1 to 5, **characterized in that** said claws (22) are distributed uniformly around said base (21).

7. Female part according to any one of the claims 1 to 6, **characterized in that**, in said insertion position, the free end of said claws is held in a groove of said female part.

8. Female part according to any one of the claims 1 to 6, **characterized in that** it comprises a cover (41) for receiving said head of the male part, defining said cavity, and a crown-shaped lid (42) fixedly attached to said receiving cover, defining the entrance to said cavity and **in that**, in said insertion position, the free end of said claws is held in a recess of said lid.

9. Female part according to any one of the claims 1 to 6, **characterized in that**, in said insertion position, the free end of said claws is held by a safety ring (63) provided at the entrance of said cavity.

10. Female part according to any one of the claims 1 to 9, **characterized in that**, in said insertion position, the base (21) of said blocking element is not in contact with the back of said cavity, and **in that**, in said blocking position, the base of said blocking element is in contact with the back of said cavity.

11. Female part according to any one of the claims 1 to 10, **characterized in that** it comprises locking means (51, 64) that lock the blocking element in the blocking position.

12. Female part according to any one of the claims 1 to 11, **characterized in that** the perimeter defined by the free end of the claws in the blocking position is appreciably equal to the perimeter of a section of said male part.

13. Female part according to any one of the claims 1 to 12, **characterized in that** the base of the blocking element is a spherical cap having a shape complementary with the back of said cavity.
